Europäisches Patentamt

European Patent Office

Office européen des brevets

(19)

(11) EP 0 852 734 B1

(12) **FASCICULE DE BREVET EUROPEEN**

(45) Date de publication et mention
de la délivrance du brevet:
**15.10.2003 Bulletin 2003/42**

(21) Numéro de dépôt: **97925030.5**

(22) Date de dépôt: **30.05.1997**

(51) Int Cl.⁷: **G01S 13/00**

(86) Numéro de dépôt international:
**PCT/EP97/02833**

(87) Numéro de publication internationale:
**WO 98/007046 (19.02.1998 Gazette 1998/07)**

(54) **PROCEDE ET DISPOSITIF DE GEODESIE ET/OU D'IMAGERIE PAR TRAITEMENT DE SIGNAUX SATELLITAIRES**

VERFAHREN UND VORRICHTUNG FÜR GEODÄSIE UND/ODER BILDERZEUGUNG MITTELS BEARBEITUNG VON SATELLITENSIGNALEN

METHOD AND DEVICE FOR GEODETIC SURVEYING AND/OR EARTH IMAGING BY SATELLITE SIGNAL PROCESSING

(84) Etats contractants désignés:
**DE FR GB IT**

(30) Priorité: **29.05.1996 FR 9606584**

(43) Date de publication de la demande:
**15.07.1998 Bulletin 1998/29**

(73) Titulaire: **CENTRE NATIONAL D'ETUDES SPATIALES
75001 Paris (FR)**

(72) Inventeur: **MASSONNET, Didier
F-31650 Saint Orens de Gameville (FR)**

(74) Mandataire: **Schrimpf, Robert et al
Cabinet Regimbeau
20, rue de Chazelles
75847 Paris cedex 17 (FR)**

(56) Documents cités:
**DE-A- 4 210 823**

- **GRIFFITHS H D ET AL: "Bistatic radar using satellite-borne illuminators of opportunity" INTERNATIONAL CONFERENCE RADAR 92 (CONF. PUBL. NO.365), BRIGHTON, UK, 12-13 OCT. 1992, ISBN 0-85296-553-2, 1992, LONDON, UK, IEE, UK, pages 276-279, XP000444617**
- **MARTIN-NEIRA M: "A PASSIVE REFLECTOMETRY AND INTERFEROMETRY SYSTEM (PARIS): APPLICATION TO OCEAN ALTIMETRY" E.S.A. JOURNAL, vol. 17, no. 4, 1 janvier 1993, pages 331-355, XP000454017**

EP 0 852 734 B1

**Description**

La présente invention est relative à un procédé et à un dispositif de géodésie et/ou d'imagerie terrestre par traitement de signaux radiosatellitaires.

Classiquement, on utilise en géodésie ou en imagerie terrestre hyperfréquence les radars imageurs à antenne synthétique (synthetic aperture radar ou SAR selon la terminologie anglo-saxonne généralement utilisée par l'Homme du Métier) que présentent certains satellites d'observation, tels que le satellite ERS-1.

Notamment, par traitement interférométrique entre images SAR, il est possible de suivre des déformations sismiques terrestres, des tremblements de terre, des eruptions volcaniques, etc..

Pour une présentation des techniques d'inteférométrie radar satellitaire et de leurs applications à l'imagerie et la géodésie terrestre, on pourra avantageusement se référer aux différentes publications suivantes :

- "Déflation of Mount Etna monitored by spaceborne radar interferometry", Didier Massonnet et al., Letters to Nature, Vol. 375, No. 6532, 15 June 1995 ;
- "Radar interferometric mapping of deformation in the year after the Landers earthquake", Didier Massonnet et al., Letters to Nature, Vol. 369, 19 May 1994 ;
- "Satellite radar interferometric map of the coseismic deformation field of the M = 6.1 Eureka Valley, California earthquake of May 17, 1993", Didier Massonnet, Kurt L. Feigl, Geophysical Research Letters, Vol. 22, No. 12, pages 1541-1544, June 15, 1995 ;
- "The displacement field of the Landers earthquake mapped by radar interferometry, Didier Massonnet et al., Letters to Nature, Vol. 364, No. 6433, 8 July 1993 ;
- "Discrimination of geophysical phenomena in satellite radar interferograms", Didier Massonnet, Kurt L. Feigl, Geophysical Research Letters, Vol. 22, No. 12, pages 1537-1540, June 15, 1995.

On pourra également se reporter à la publication :

- "A passive reflectometry and interferometry system (Paris) : application to ocean altimetry", Martin-Neira M, E.S. A. Journal, Vol. 17, No. 4, 1 janvier 1993, pages 331-355,

qui décrit une méthode de calcul d'altitude sans passage par une image.

L'observation terrestre SAR satellitaire est d'une utilisation difficile par les géomètres au sol, qui ne sont généralement pas des spécialistes de ces techniques.

Un but de l'invention est de proposer un procédé et un dispositif d'imagerie ou de géodésie qui permettent d'accéder aux mêmes informations que les techniques SAR satellitaires tout en étant d'une grande facilité d'emploi au sol.

La comparaison d'un signal réfléchi avec un signal de référence est une technique utilisée dans d'autres applications, par exemple pour la détermination d'images radioélectriques destinées à permettre l'aide à l'atterrissage d'aéronefs, ainsi que cela a été proposé dans DE 42 10 823.

Toutefois, dans ce document, le signal réfléchi et le signal de référence sont relevés à partir d'un système qui est mobile (avion) ce qui restreint l'intervalle de temps pendant lequel on peut observer le rayonnement de référence, impose des traitements de données compliqués, puisqu'il faut tenir compte des paramètres de mouvement des récepteurs, et interdit des mesures de précision.

Notamment, cette disposition empêche la comparaison de signaux pris à des dates différentes et ne permettrait pas de fournir une information géodésique sur les mouvements du sol entre deux dates, et encore moins une information tridimensionnelle.

L'invention propose quant à elle un procédé de géodésie et/ou d'imagerie terrestre, selon la revendication 1.

Ainsi, avec un minimum d'instruments à manipuler, il est possible à un géomètre au sol de faire des mesures géodésiques fines, ainsi que des mesures de champ de déplacement dans les trois dimensions.

Ce procédé est avantageusement complété par les différentes caractéristiques suivantes, prises seules ou selon toutes leurs combinaisons techniquement possibles :

- le signal de référence est un signal radiosatellitaire direct capté au moyen d'une antenne disposée au voisinage de l'antenne directive ;
- on met en oeuvre un traitement de corrélation entre le signal radiosatellitaire réfléchi capté par l'antenne directive et le signal de référence, ainsi qu'une correction de phase pour tenir compte du déplacement du satellite qui émet le signal capté entre deux mesures ;
- le signal radiosatellitaire capté est un signal de radiopositionnement GPS, ou de SAR.

L'invention concerne également un dispositif de géodésie et/ou d'imagerie terrestre, selon la revendication 6.

Avantageusement, le dispositif comporte une antenne disposée au voisinage de l'antenne directive pour capter un signal radiosatellitaire direct destiné à servir de signal de référence.

Cette antenne destinée à capter le signal radiosatellitaire de référence peut être une antenne non directive.

Elle peut également être une antenne directive orientée en direction du satellite dont le signal radiosatellitaire est exploité.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique illustrant une mise en oeuvre de l'invention ;
- la figure 2 est un schéma illustrant les paramètres à prendre en compte pour la détermination de la longueur de corrélation ;
- la figure 3 est une représentation schématique illustrant le traitement interférométrique du procédé proposé par l'invention ;
- la figure 4, enfin, illustre une mise en oeuvre de l'invention pour l'observation de mouvements tridimensionnels sur une zone donnée.

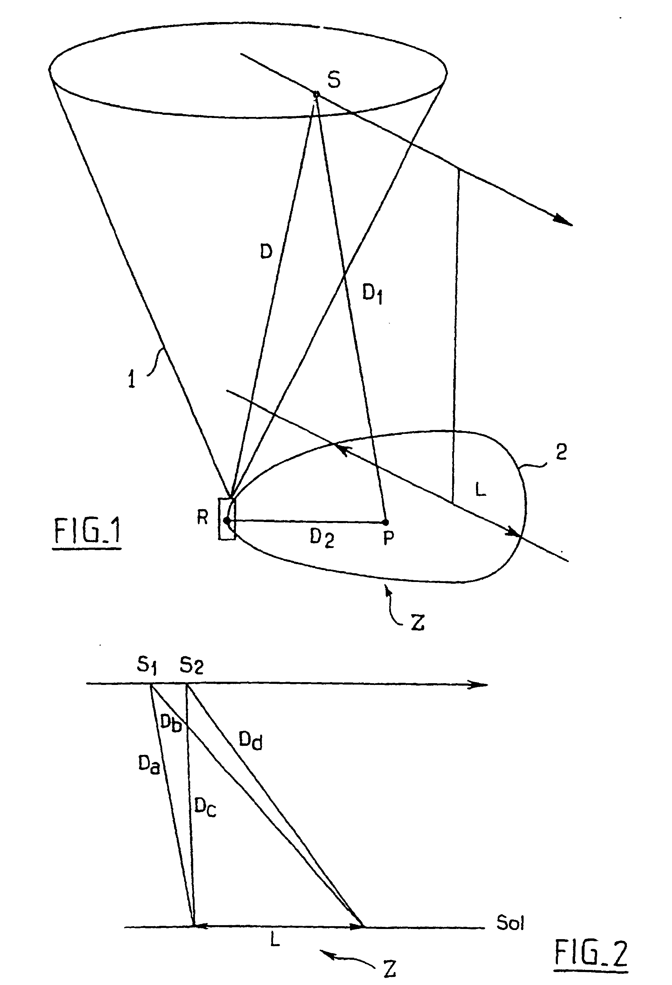

On a représenté sur la figure 1 un satellite S qui émet un signal radioélectrique vers la terre dans une bande de fréquence donnée.

Au sol, le dispositif conforme à l'invention est constitué par un récepteur R qui est disposé à proximité de la zone Z que l'on souhaite observer et qui présente deux antennes qui ont été schématisées sur la figure 1 par leurs diagrammes d'antenne 1 et 2.

Le récepteur R peut bien entendu être soit directement posé sur le sol, soit être quasi-fixe par rapport au sol, en étant par exemple porté par un ballon captif.

L'une est une antenne haute et est non directive (diagramme d'antenne 1). Elle capte le signal radioélectrique émis vers la terre par le satellite S. Le signal ainsi relevé sert de signal de référence.

L'autre antenne (diagramme d'antenne 2) est une antenne directive et observe la zone du sol dont on souhaite relever des images ou des mesures géodésiques.

Cette deuxième antenne relève donc le signal rétroréfléchi par le sol.

Le satellite S et le signal radioélectrique qu'il émet peuvent être de toute sorte.

Comme on l'aura compris, l'invention présente l'avantage de permettre d'obtenir une image ou des mesures géodésiques par exploitation de signaux radioélectriques émis par des systèmes spatiaux déjà existants.

Par exemple, et de façon avantageuse, le récepteur R est à l'écoute du signal de radiopositionnement émis par un satellite S de la constellation GPS.

Ou encore, le satellite S peut être le satellite ERS-1, le signal radioélectrique écouté étant le signal émis par son radar SAR.

On notera que dans le cas où plusieurs satellites émettent dans la même bande de fréquence, ce qui est notamment le cas des satellites GPS, il est nécessaire de doter l'antenne haute d'une certaine directivité afin d'éviter le brouillage entre les signaux émis par les différents émetteurs de ces satellites.

Le récepteur R comporte des moyens pour amplifier de manière adéquate les signaux radioélectriques reçus par les antennes, un filtre d'entrée adapté au signal spatial que l'on cherche à détecter, ainsi que des moyens permettant de mélanger les signaux reçus à une porteuse de l'émetteur, de façon à récupérer les signaux en bande de base. La porteuse est reproduite avec une précision suffisante pour que tout écart soit largement inférieur à la largeur de bande d'émission du signal.

Le récepteur R comporte également des moyens pour échantillonner les signaux en bande de base ainsi obtenus. Pour conserver la bande utile, le pas d'échantillonnage est inférieur à c/B, où c est la vitesse de la lumière et B est la largeur de bande de l'émetteur (ERS: 15 MHz ; GPS: 20 MHz).

Dans toute la suite du texte, on désigne par M(k) et S(k) les signaux échantillonnés respectivement en sortie de l'antenne haute (signal émis par le satellite) et de l'antenne directive (signal d'écho), k étant un indice entier correspondant à l'indexation des échantillonnages.

Le récepteur R comporte des moyens qui réalisent un traitement de corrélation, un traitement de calcul d'images, ainsi qu'un traitement interféromètrique.

Ces différents traitements vont maintenant être décrits de façon détaillée.

1) *Corrélation - Production des lignes*

On corrèle M et S et on calcule un signal L correspondant pour un temps donné, c'est à dire à un entier d'indexation n, à la ligne $L_n$ telle que:

$$L_n(i) = \sum_{k=n}^{k=n+long} M(k) * S(k+i)$$

où * désigne l'opération de conjugaison complexe et "long" la longueur de corrélation qui sera détaillée plus loin.

Cette ligne $L_n$ est constituée d'autant d'échantillons qu'il y a de valeurs différentes de i.

En pratique, il suffit que la ligne couvre la zone observée, donc le nombre d'échantillons est choisi égal à la profondeur de la zone observée divisée par la taille de la cellule de résolution, en général proche de c/B.

Sur la figure 1, on a représenté un point P au sol éloigné d'une distance D1 du satellite S et d'une distance D2 du récepteur R. La distance entre le satellite S et le récepteur R étant notée D, ce point P correspond à l'échantillon : $i = (D_1 + D_2 - D) . B/c$.

La longueur de corrélation "*long*" est égale :

- au nombre d'échantillons de l'impulsion si l'émetteur est du type discontinu ; par exemple, dans le cas de l'écoute des signaux de l'émetteur SAR du satellite ERS-l qui émet des impulsions de 30 µs à un rythme de l'ordre de 1700 Hz, cette longueur "long" est égale 700 ;
- au nombre d'échantillons correspondant au temps nécessaire pour passer d'une ligne à la suivante si l'émetteur est du type continu (cas GPS). Nous appelons l'inverse de ce temps "pseudo-fréquence de répétition".

Le calcul de ce temps est explicité en référence à la figure 2. Pour échantillonner convenablement le signal envoyé sur une zone d'observation de largeur L dans la direction d'avancement du satellite (flèches sur les figures 1 et 2), on recueille une nouvelle mesure chaque fois que le signal se décorrèle, c'est-à-dire dès que le changement de position du satellite de la position S1 à la position S2 fait que la différence de portée de vue entre les extrémités de la zone observée change d'une valeur égale à la longueur d'onde, soit :

$$[(D_d-D_c) - (D_b-D_a)] < \lambda$$

où $(D_d-D_c)$ et $(D_b-D_a)$ représentent respectivement pour la position S1 et la position S2 la différence de portée de vue du satellite entre les extrémités de la zone observée et où $\lambda$ est la longueur d'onde du signal pseudo-aléatoire.

Dans le cas d'un satellite GPS situé à la verticale d'une zone observée de 10 km de largeur, la pseudo-fréquence de répétition calculée est de 10 Hertz, soit un temps entre lignes de 0,1 seconde et une longueur de corrélation "*long*" de l'ordre de 2.000.000. Lorsque le satellite émetteur se déplace par rapport à sa position de zénith, la pseudo-fréquence décroît (la valeur "*long*" donnée ci-dessus convient donc toujours).

Si l'on applique le même critère au cas discontinu du satellite ERS-l observant une zone de 5 km de large, on trouve comme condition que la pseudo-fréquence de répétition doit être au moins égale à 850 Hertz, soit la moitié de la fréquence effectivement appliquée par l'émetteur. Ceci s'explique par le fait que ce système est conçu pour échantillonner convenablement les signaux ayant effectué le trajet aller-retour entre le satellite et la terre, ce qui double toutes les variations de distance. Une autre particularité de l'utilisation de ce système est que cette pseudo-fréquence ne change pas si la zone observée dépasse 5 km de largeur, car de toute façon le satellite ERS n'éclaire que 5 km de large, ce qui limite la zone observée instantanément. De toute façon et comme cela a été indiqué précédemment, un système discontinu impose à l'appareil sa fréquence répétition (1700 Hz dans le cas ERS).

On notera qu'étant donné que le signal de référence est extrait directement par l'antenne haute fréquence, il n'est pas nécessaire pour le récepteur de connaître précisément le format du signal qu'il exploite. En particulier, l'invention peut être mise en oeuvre avec le système GPS sans que la connaissance des codes précis ne soit nécessaire.

Par ailleurs, on notera également que la corrélation du signal d'origine avec le signal en provenance du sol sépare également les contributions des différentes satellites GPS éclairant simultanément la zone observée.

## 2) Détermination de l'image

La détermination de l'image complète le traitement précédent par un traitement sur les lignes analogue au traitement classiquement mis en oeuvre dans le cas de radar à synthèse d'ouverture.

On pourra à cet égard avantageusement se référer à la publication suivante :

- "CNES General-Purpose SAR Correlator", D. Massonnet, M. Rossi, F. Adragna, IEEE (TGARS), Vol. 32, n° 3 (05-1994) ; dont l'enseignement est ici inclus par référence.

Par exemple, ce traitement peut comporter les différentes étapes suivantes, pour chaque point de la zone observée :

- on calcule le numéro d'échantillon i caractéristique de ce point dans chacune des lignes décrites précédemment ;
- si ce numéro est fractionnaire, on rééchantillonne éventuellement la ligne pour obtenir l'échantillon complexe correspondant exactement à i ;
- on corrige la phase du nombre complexe obtenu de l'écart de phase, $2\pi (D_1+D_2-D)/\lambda$, au moment où la ligne était acquise, par rapport à un écart de référence, par exemple celui calculé au moment où la distance $D_1+D_2-D$ était minimale ;
- on somme les nombres complexes obtenus pour ce point dans chacune des lignes.

On obtient alors une image de nombres complexes, analogue à une image de radar à synthèse d'ouverture. D'autres architectures de traitement sont bien entendu possibles.

La résolution de l'image selon la direction perpendiculaire à la direction d'avancement du satellite est de l'ordre de c/B. Elle peut varier selon la position de l'émetteur et l'orientation de sa trajectoire par rapport à l'axe de visée de l'appareil.

La résolution par rapport à la direction d'avancement du satellite dépend du temps pendant lequel la zone a été observée et traitée. Dans cette direction, la taille de la cellule de résolution est approximativement égale à la largeur L de la zone divisée par le produit du temps d'observation et de la valeur limite minimale de la pseudo-fréquence de répétition.

Si le rapport signal sur bruit de l'image produite est insuffisant, on peut améliorer l'aspect de l'amplitude de l'image en effectuant une détection quadratique sur un voisinage de pixels. Cette opération améliore la qualité radiométrique au détriment de la finesse de résolution. Pour les traitements interférométriques, il faut cependant garder l'image complexe pour être en mesure de la combiner avec une autre image, quitte à améliorer ultérieurement le signal en moyennant la combinaison.

*3) Traitements interférométriques*

Des images prises à des dates différentes par le même récepteur R ou simultanément par deux récepteurs R situés à des endroits distincts peuvent être combinées par la technique d'interférométrie par ailleurs connue en elle-même et qui ne sera pas ici particulièrement détaillée.

Pour des exemples d'application des techniques interférométriques, on pourra avantageusement se référer aux articles déjà cités précédemment, ainsi qu'à

- "Radar interferometry : Limits and Potential", D. Massonnet, Th. Rabaute, IEEE (TGARS), Vol. 31, n° 2 (03-1993).

On pourra également avantageusement se référer aux différentes publications citées en référence dans ces articles.

On notera qu'un avantage important de l'invention tient en ce que les conditions imposées par la technique d'interférométrie à la précision de répétition des trajectoires des satellites - qui ont été décrites de façon générale dans la référence [5] - sont relaxées d'un facteur de l'ordre de deux par le fait que l'onde décrit un trajet simple.

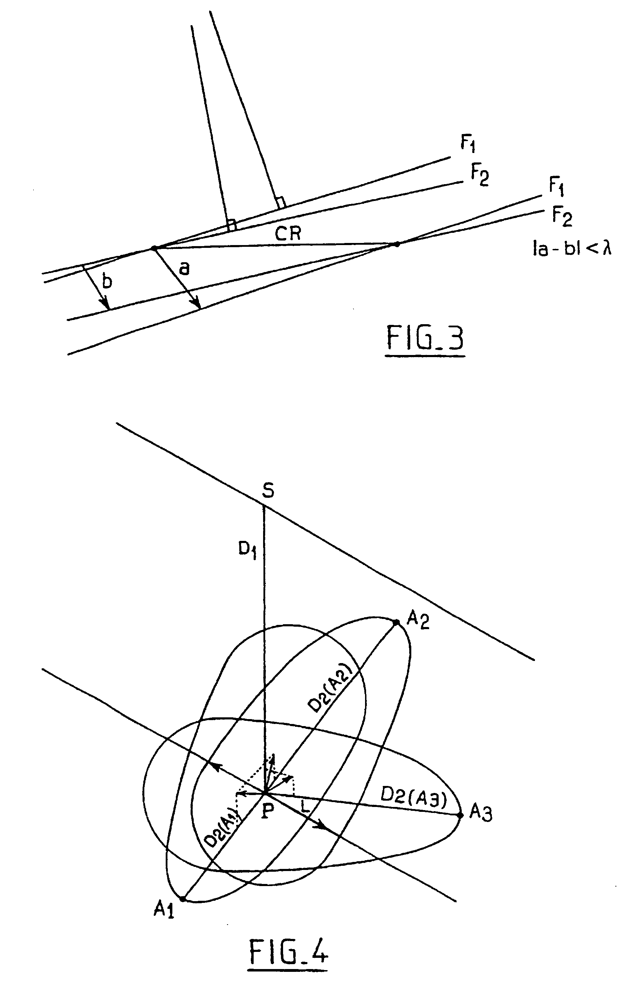

Plus précisément, une cellule de résolution au sol doit être observée avec une différence d'incidence, dans chacune des images, n'aboutissant pas à une différence de marche égale ou supérieure à la longueur d'onde λ. C'est ce qui a été illustré sur la figure 3 sur laquelle on a représenté les fronts d'onde F1 et F2 d'une même cellule de résolution CR. Les tailles des cellules de résolution étant respectivement de "a" et "b", la condition d'interférométrie impose $| b - a | < \lambda$.

Dans le cas d'ERS-l, la limite d'écart entre deux orbites permettant d'appliquer l'interférométrie aux images acquises lors de ces deux orbites est de l'ordre de 1 km. La condition est remplie pour 60 % des orbites.

Pour les images obtenues en mettant en oeuvre l'invention en écoutant les signaux radars ERS, cette limite passe à 2 km. Presque toutes les orbites sont alors utilisables.

Dans le cas d'un émetteur GPS, il faut un écart par rapport à l'orbite nominale au plus de l'ordre de 250 km pour rester dans des conditions interférométriques. Cette technique est donc applicable au moins dans le cas suivant :

La corrélation GPS comprend 24 satellites dont les trajectoires sont placées dans six plans orbitaux à raison de 4 satellites par plan, fixe par rapport aux étoiles. Les orbites sont parcourues en 12 heures. Si l'on veut comparer une image acquise, par exemple, alors qu'un satellite GPS était au zénith de la zone, avec une autre image, il faudra attendre que cette zone repasse dans l'un des six plans orbitaux. En particulier, au bout d'une journée, on se trouvera dans le même plan orbital approximativement sous le même satellite, mais avec un écart de quatre minutes (lié à la différence entre jour solaire et jour sidéral), or la rotation de la terre crée un déplacement d'au plus 110 km (à l'équateur) pendant cette période.

Il existe de nombreuses autres occasions de combinaisons interféromètriques entre satellites GPS différents. Par exemple au bout de 6 ou 12 heures, ou bien en attendant que l'écart sidéral (qui atteint une heure en 15 jours), combiné à un changement de plan (un point donné de la terre franchit un plan orbital GPS toutes les deux heures) permette de se trouver sous un autre satellite GPS, à mieux que 250 km.

On va maintenant décrire en référence à la figure 4 un exemple d'utilisation possible de l'invention.

Sur cette figure 4, on a représenté un site dont on veut surveiller les mouvements dans les trois dimensions. On utilise à cet effet trois récepteurs que l'on dispose en plusieurs points A1, A2, A3 du site. Ces trois récepteurs effectuent une mesure aux deux extrémités de la période de temps à surveiller. Les antennes directives de ces récepteurs - qui ont été schématisées par leur diagramme d'antenne - sont orientées, ainsi qu'illustré sur la figure 4, de façon à permettre une surveillance du mouvement du site selon trois dimensions.

Pour un point P donné du site, chacun des récepteurs est sensible à la variation de la somme des distances $D_1$ et $D_2$, où $D_1$ est la distance entre P et le satellite émetteur et $D_2$ la distance entre P et le récepteur. Géométriquement parlant, chaque récepteur mesure, au point P, le déplacement selon le vecteur normal à l'ellipsoïde de révolution passant par P dont les foyers sont la position moyenne de l'émetteur pendant la mesure et la position du récepteur. On comprendra qu'une disposition judicieuse des trois récepteurs permet de reconstruire les trois dimensions du mouvement au point P.

Si l'on sait que le mouvement est purement vertical, la mesure s'obtient plus simplement, à l'aide d'un seul récepteur effectuant une mesure aux deux extrémités de la période de temps à surveiller. La comparaison des deux mesures fournira, sur chaque point de l'image, un déplacement qui peut être entièrement attribué à la composante verticale du vecteur SP normé, cette composante verticale étant désignée par $SP_z$, si la mesure de différence de phase donne x% de la longueur d'onde, le mouvement vertical au point P vaut $x.\lambda/SP_z$.

En cas d'écoute GPS, les deux fréquences du signal peuvent être utilisées pour détecter et éliminer les effets de trajet ionosphériques.

Par ailleurs, on peut envisager un système capable d'écouter simultanément plusieurs satellites, par exemple, comme c'est le cas pour les récepteurs GPS classiques, quatre satellites GPS.

Les récepteurs comportent des moyens de réception adaptés aux deux fréquences, ainsi qu'une grande antenne dirigée vers le sol.

Il est également possible de prévoir que le signal radioélectrique de référence soit capté par le ou les récepteurs au moyen d'antennes directives, de petites tailles, dirigées mécaniquement ou électroniquement vers les satellites.

Les huit signaux ainsi captés par un récepteur permettent alors de déterminer la position du récepteur, puis sont numérisés (sur 20 MHz) et mélangés aux signaux réfléchis par le sol, avec des retards variables, ce qui permet de distinguer les signaux de chaque satellite et de les ranger en fonction des distances $D_1 + D_2$ (notation de la figure 1). On notera que là encore les récepteurs extraient directement des signaux de référence GPS. Il n'est donc pas besoin d'être abonné au code précis.

Par ailleurs, la corrélation du signal d'origine avec le signal en provenance du sol sépare également les contributions des différents satellites GPS.

Comme on l'aura compris, le système selon l'invention présente de nombreux avantages.

Etant donné qu'il n'émet lui-même aucun signal radioélectrique, il peut s'installer sans autorisations particulières.

Comme le signal de la plupart des émetteurs est reçu par le terrain sous une incidence faible, le système est particulièrement sensible aux mouvements verticaux, bien que tous les récepteurs soient en général placés dans un plan (celui du sol).

La mesure géodésique est accompagnée d'une image analogue aux images obtenues à l'aide de radars imageurs. Bien que cette image ne soit pas aussi facile à interpréter qu'une image conventionnelle, elle permet de se repérer et de détecter d'éventuels artefacts en offrant un support visuel à la mesure géodésique.

## Revendications

1. Procédé de géodésie et/ou d'imagerie terrestre selon lequel on capte, au moyen d'au moins une antenne directive (2), un signal radiosatellitaire réfléchi au sol, et on traite ce signal avec un signal de référence correspondant au signal radiosatellitaire pour obtenir une image de la zone (Z) en direction de laquelle l'antenne directive (2) est orientée, **caractérisé en ce que** l'antenne directive est une antenne fixe par rapport au sol et **en ce qu'**on met en oeuvre un traitement interférométrique sur des images relevées à des dates différentes par une même telle antenne directive ou simultanément par plusieurs telles antennes directives situées à des endroits distincts.

**2.** Procédé selon l'une des revendications précédentes, **caractérisé en ce que** le signal de référence est un signal radiosatellitaire direct capté au moyen d'une antenne (1) disposée au voisinage de l'antenne directive (2).

**3.** Procédé selon l'une des revendications précédentes, **caractérisé en ce qu'**on met en oeuvre un traitement de corrélation entre le signal radiosatellitaire réfléchi capté par l'antenne directive (2) et le signal de référence, ainsi qu'une correction de phase pour tenir compte du déplacement du satellite (S) qui émet le signal capté entre deux mesures.

**4.** Procédé selon l'une des revendications précédentes, **caractérisé en ce que** le signal radiosatellitaire capté est un signal de radiopositionnement GPS.

**5.** Procédé selon l'une des revendications 1 à 3, **caractérisé en ce que** le signal radiosatellitaire capté est un signal de SAR.

**6.** Dispositif de géodésie et/ou d'imagerie terrestre comportant au moins une antenne directive (2) orientée vers le sol, des moyens de réception (R) en sortie de l'antenne permettant de capter un signal radiosatellitaire réfléchi au sol et reçu par l'antenne, ainsi que des moyens de traitement pour déterminer, en fonction de ce signal capté et d'un signal de référence, une image de la zone (Z) en direction de laquelle l'antenne est orientée, **caractérisé en ce qu'**une telle antenne est fixe par rapport au sol et **en ce qu'**il comporte des moyens aptes à mettre en oeuvre un traitement interférométrique sur des images relevées à des dates différentes par une même telle antenne directive et/ou simultanément par plusieurs telles antennes directives situées à des endroits distincts.

**7.** Dispositif selon la revendication 6, **caractérisé en ce qu'**il comporte une antenne (1) disposée au voisinage de l'antenne directive (2) pour capter un signal radiosatellitaire direct destiné à servir de signal de référence.

**8.** Dispositif selon la revendication 7, **caractérisé en ce que** l'antenne (1) destinée à capter le signal radiosatellitaire de référence est une antenne non directive.

**9.** Dispositif selon la revendication 8, **caractérisé en ce que** l'antenne (1) destinée à capter le signal radiosatellitaire de référence est une antenne directive (2) orientée en direction du satellite (S) dont le signal radiosatellitaire est exploité.

**Patentansprüche**

**1.** Verfahren für Geodäsie und/oder terrestrische Bilderzeugung, bei dem mittels wenigstens einer Richtantenne (2) ein am Boden reflektiertes Radiosatellitensignal aufgenommen und mit einem dem Radiosatellitensignal entsprechenden Referenzsignal behandelt wird, um ein Bild des Bereichs (Z) zu erhalten, in dessen Richtung die Richtantenne (2) orientiert ist, **dadurch gekennzeichnet, dass** die Richtantenne eine in Bezug auf den Boden feste Antenne ist und dass eine interferometrische Verarbeitung an den Bildern durchgeführt wird, die zu verschiedenen Zeitpunkten von einer solchen Richtantenne oder gleichzeitig von mehreren solcher an unterschiedlichen Orten angeordneten Richtantennen aufgenommen werden.

**2.** Verfahren nach Anspruch 1, **dadurch gekennzeichnet, dass** das Referenzsignal ein direktes Radiosatellitensignal ist, das mittels einer Antenne (1) aufgenommen wird, die in der Nähe der Richtantenne (2) angeordnet ist.

**3.** Verfahren nach einem der vorhergehenden Ansprüche, **dadurch gekennzeichnet, dass** eine Korrelationsbehandlung zwischen dem von der gerichteten Antenne (2) aufgenommenen reflektierten Radiosatellitensignal und dem Referenzsignal sowie eine Phasenkorrektur durchgeführt werden, um die Bewegung des Satelliten (S), der das aufgenommene Signal aussendet, zwischen zwei Messungen zu berücksichtigen.

**4.** Verfahren nach einem der vorhergehenden Ansprüche, **dadurch gekennzeichnet, dass** das aufgenommene Radiosatellitensignal ein GPS-Radiopositionsbestimmungssignal ist.

**5.** Verfahren nach einem der Ansprüche 1 bis 3, **dadurch gekennzeichnet, dass** das aufgenommene Radiosatellitensignal ein SAR-Signal ist.

7

## EP 0 852 734 B1

**6.** Vorrichtung für Geodäsie und/oder terrestrische Bilderzeugung, die folgendes umfaßt: wenigstens eine Richtantenne (2), die zum Boden orientiert ist, Empfangsmittel (R) am Ausgang der Antenne, die es erlauben, ein am Boden reflektiertes und von der Antenne empfangenes Radiosatellitensignal aufzunehmen, sowie Verarbeitungsmittel zum Bestimmen eines Bildes des Bereichs (Z) in dessen Richtung die Antenne orientiert ist, abhängig von dem aufgenommenen Signal und einem Referenzsignal **dadurch gekennzeichnet, dass** eine solche Antenne in Bezug auf den Boden fest ist und dass sie geeignete Mittel zum Durchführen einer interferometrischen Verarbeitung an den zu unterschiedlichen Zeitpunkten von einer solchen Richtantenne und/oder gleichzeitig von mehreren solcher an unterschiedlichen Orten angeordneten Richtantennen aufgenommenen Bildern umfasst.

**7.** Vorrichtung nach Anspruch 6, **dadurch gekennzeichnet, dass** sie eine Antenne (1) in der Nähe der Richtantenne (2) aufweist, um ein direktes Radiosatellitensignal aufzunehmen, das dazu bestimmt ist als Referenzsignal zu dienen.

**8.** Vorrichtung nach Anspruch 7, **dadurch gekennzeichnet, dass** die Antenne (1) zum Aufnehmen des Referenz-Radiosatellitensignals eine ungerichtete Antenne ist.

**9.** Vorrichtung nach Anspruch 8, **dadurch gekennzeichnet, dass** die Antenne (1) zur Aufnahme des Referenz-Radiosatellitensignals eine Richtantenne (2) ist, die in Richtung des Satelliten (S) orientiert ist, dessen Radiosatellitensignal ausgewertet wird.

**Claims**

**1.** A method of geoid measurement and/or earth imaging, in which at least one directional antenna (2) is used to pick up a radio signal transmitted from a satellite and reflected on the ground, and said signal is processed using a reference signal that corresponds to the radio signal transmitted from the satellite in order to obtain an image of the zone (Z) towards which the directional antenna (2) is pointed, the method being **characterized in that** the directional antenna is an antenna that is fixed relative to the ground, and **in that** interferometric processing is implemented on images taken at different dates by a single such directional antenna or simultaneously by a plurality of such directional antennas situated at distinct locations.

**2.** A method according to any preceding claim, **characterized in that** the reference signal is a radio signal picked up directly from the satellite by means of an antenna (1) disposed in the vicinity of the directional antenna (2).

**3.** A method according to any preceding claim, **characterized in that** correlation processing is implemented between the reference signal and the reflected radio signal from the satellite as picked up by the directional antenna (2), together with a phase correction to take account of the displacement between two measurements of the satellite (S) which transmits the picked-up signal.

**4.** A method according to any preceding claim, **characterized in that** the picked-up radio signal from the satellite is a GPS radio positioning signal.

**5.** A method according to any one of claims 1 to 3, **characterized in that** the picked-up radio signal from the satellite is an SAR signal.

**6.** Apparatus for geoid measurement and/or earth imaging, the apparatus comprising at least one directional antenna (2) that points towards the ground, receiver means (R) at the output from the antenna, enabling a radio signal from a satellite to be picked-up after being reflected on the ground and received by the antenna, together with processor means for determining an image of the zone (Z) towards which the antenna is pointed as a function of said picked-up signal and of a reference signal, the apparatus being **characterized in that** such an antenna is fixed relative, to the ground, and **in that** it comprises means suitable for implementing interferometric processing on images taken at different dates by a single such directional antenna and/or simultaneously by a plurality of such directional antennas situated at distinct locations.

**7.** Apparatus according to claim 6, **characterized in that** it includes an antenna (1) disposed in the vicinity of the directional antenna (2) to pick up a radio signal directly from the satellite for the purpose of serving as a reference signal.

8

8. Apparatus according to claim 7, **characterized in that** the antenna (1) for picking up the reference radio signal from the satellite is a non-directional antenna.

9. Apparatus according to claim 8, **characterized in that** the antenna (1) for picking up the reference radio signal from the satellite is a directional antenna (2) pointed at the satellite (S) whose radio signal is used.

FIG.1

FIG.2

$|a - b| < \lambda$

FIG.3

FIG.4